# EUROPEAN PATENT APPLICATION

(11) **EP 4 848 183 A1**
(43) Date of publication of application: **02.12.2026**
(21) Application number: 25827021.4
(22) Date of filing: 24.06.2025
(51) Int. Cl.: G06Q 20/36, G06F 3/0484, G06Q 20/32, G06N 3/0464, G06N 3/045, G06N 3/044, G06N 3/0475, G06N 3/0499

(54) **ELECTRONIC DEVICE AND METHOD FOR REGISTERING ESSENTIALS, AND NON-TRANSITORY COMPUTER-READABLE STORAGE MEDIUM**

(30) Priority: 28.06.2024 KR 20240085844; 26.07.2024 KR 20240099187
(71) Applicant: Samsung Electronics Co., Ltd., Suwon-si, Gyeonggi-do 16677 (KR)
(72) Inventor: LEE, Youna, Suwon-si, Gyeonggi-do 16677 (KR); JE, Seongmin, Suwon-si, Gyeonggi-do 16677 (KR); KIM, Jihyun, Suwon-si, Gyeonggi-do 16677 (KR); SON, Jaesung, Suwon-si, Gyeonggi-do 16677 (KR); SHIN, Jaeyoung, Suwon-si, Gyeonggi-do 16677 (KR); CHOI, Jinwan, Suwon-si, Gyeonggi-do 16677 (KR)
(74) Representative: Nederlandsch Octrooibureau
(86) International application number: PCT/KR2025/008832
(87) International publication number: WO 2026/005451

(57) **Abstract**

This electronic device can: acquire a first user input for a first user interface for adding a means for a transaction on a first screen of a digital wallet displayed on a display; on the basis of acquiring the first user input for the first user interface, display, through the display, a second screen for acquiring image data related to the means for the transaction; and, on the basis of inputting the image data into a vision language model on the basis of acquiring a second user input for determining the image data related to the means for the transaction, acquire, on the second screen, text data related to the means for the transaction indicated by the image data. The text data can include information for determining a category of the means for the transaction. In the electronic device, the digital wallet can register the means for the transaction in a category indicated by the text data from among a plurality of categories.

## Description

### [Technical Field]

The following descriptions relate to an electronic device, a method, and a non-transitory computer readable storage medium for registering an essential.

### [Background Art]

There is an application (e.g., a digital wallet) that manages a credit card for online or offline payment, information for digital authentication (or an electronic signature), an identification card, a boarding pass, a ticket, or a coupon on a mobile device. As an example of a digital wallet, there is Samsung Wallet.

### [Disclosure]

### [Technical Solution]

An electronic device is disclosed. The electronic device may comprise a display, at least one processor comprising processing circuitry, and memory, comprising one or more storage mediums, storing instructions. The instructions, when executed by the at least one processor individually or collectively, may cause the electronic device to obtain a first user input for a first user interface for adding means for a transaction in a first screen of a digital wallet displayed on the display. The instructions, when executed by the at least one processor individually or collectively, may cause the electronic device to display, through the display, a second screen for obtaining image data related to the means for the transaction, based on obtaining the first user input for the first user interface. The instructions, when executed by the at least one processor individually or collectively, may cause the electronic device to, based on obtaining a second user input for determining the image data related to the means for the transaction in the second screen, obtain text data related to the means for the transaction indicated by the image data, based on inputting the image data to a vision language model (VLM). The text data may include information for determining a category of the means for the transaction. The instructions, when executed by the at least one processor individually or collectively, may cause the electronic device to register, by the digital wallet, the means for the transaction in a category indicated by the text data among a plurality of categories.

A method is disclosed. The method may be performed in an electronic device comprising a display. The method may comprise obtaining a first user input for a first user interface for adding means for a transaction in a first screen of a digital wallet displayed on the display. The method may comprise displaying, through the display, a second screen for obtaining image data related to the means for the transaction, based on obtaining the first user input for the first user interface. The method may comprise, based on obtaining a second user input for determining the image data related to the means for the transaction in the second screen, obtaining text data related to the means for the transaction indicated by the image data, based on inputting the image data to a vision language model (VLM). The text data may include information for determining a category of the means for the transaction. The method may comprise registering, by the digital wallet, the means for the transaction in a category indicated by the text data among a plurality of categories.

A non-transitory computer readable storage medium is disclosed. The non-transitory computer readable storage medium may store a program comprising instructions. The instructions, when executed by at least one processor of an electronic device comprising a display individually or collectively, may cause the electronic device to obtain a first user input for a first user interface for adding means for a transaction in a first screen of a digital wallet displayed on the display. The instructions, when executed by the at least one processor individually or collectively, may cause the electronic device to display, through the display, a second screen for obtaining image data related to the means for the transaction, based on obtaining the first user input for the first user interface. The instructions, when executed by the at least one processor individually or collectively, may cause the electronic device to, based on obtaining a second user input for determining the image data related to the means for the transaction in the second screen, obtain text data related to the means for the transaction indicated by the image data, based on inputting the image data to a vision language model (VLM). The text data may include information for determining a category of the means for the transaction. The instructions, when executed by the at least one processor individually or collectively, may cause the electronic device to register, by the digital wallet, the means for the transaction in a category indicated by the text data among a plurality of categories.

### [Description of the Drawings]

FIG. 1 is a block diagram of an electronic device in a network environment, according to various embodiments.
FIG. 2 is a block diagram of an electronic device, according to an embodiment.
FIG. 3 is a flowchart illustrating an operation of an electronic device, according to an embodiment.
FIG. 4A is a diagram illustrating a screen of a digital wallet, according to an embodiment.
FIGS. 4B and 4C are diagrams illustrating screens for obtaining image data, according to an embodiment.
FIG. 5 is a diagram illustrating a screen indicating information of an essential, according to an embodiment.
FIGS. 6A to 6D are diagrams illustrating screens indicating information of an essential according to an essential category, according to an embodiment.
FIG. 7 is a diagram illustrating a screen for selecting a method for obtaining information of an essential, according to an embodiment.
FIG. 8 is a flowchart illustrating an operation in which an electronic device registers an essential, according to an embodiment.
FIG. 9A is a diagram illustrating essential data indicating an essential, according to an embodiment.
FIG. 9B is a diagram illustrating a screen classifying essentials, according to an embodiment.
FIG. 9C is a diagram illustrating a screen indicating essentials included in an essential category, according to an embodiment.
FIG. 10 is a flowchart illustrating an operation in which an electronic device updates an essential, according to an embodiment.
FIG. 11 is a flowchart illustrating an operation in which an electronic device updates an essential, according to an embodiment.
FIG. 12 is a diagram illustrating essential data indicating an updated essential, according to an embodiment.
FIG. 13 is a block diagram of an electronic device and servers, according to an embodiment.

### [Mode for Invention]

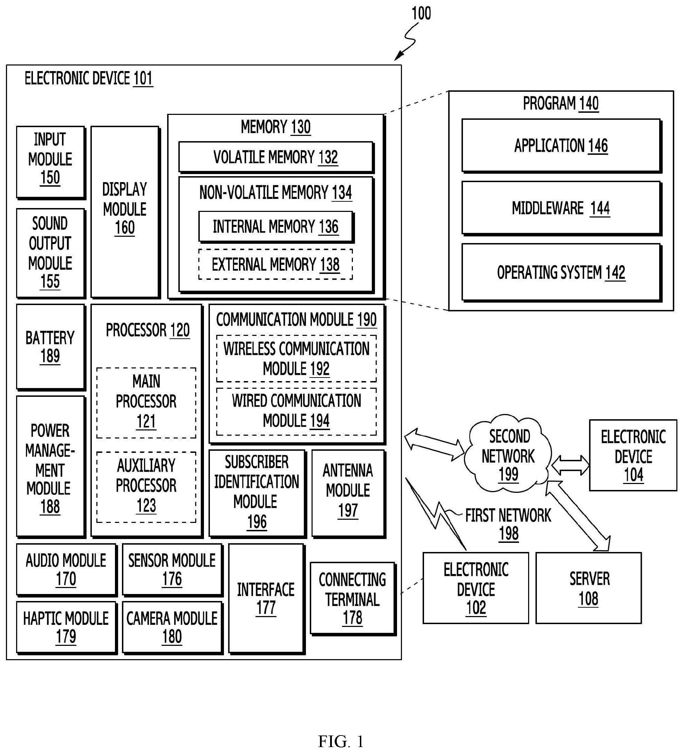

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

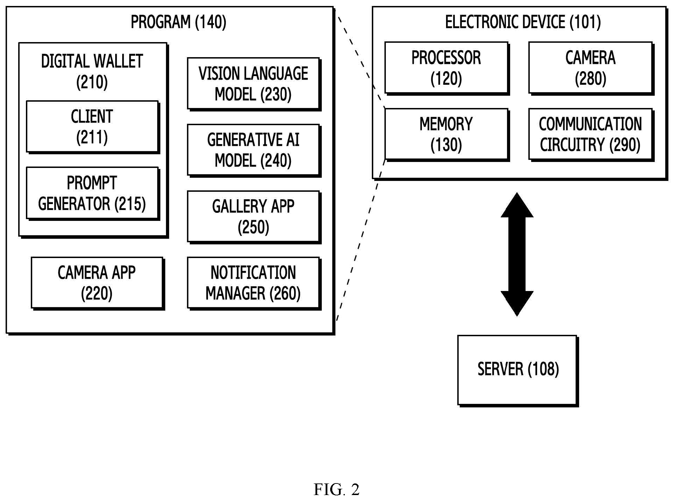

FIG. 2 is a block diagram of an electronic device, according to an embodiment.

Referring to FIG. 2, an electronic device 101 may include a processor 120, memory 130, a camera 280, and communication circuitry 290. In an embodiment, the processor 120, the memory 130, the camera 280, and the communication circuitry 290 of FIG. 2 may correspond to the processor 120, the memory 130, the camera module 180, and the communication module 190 of FIG. 1, respectively.

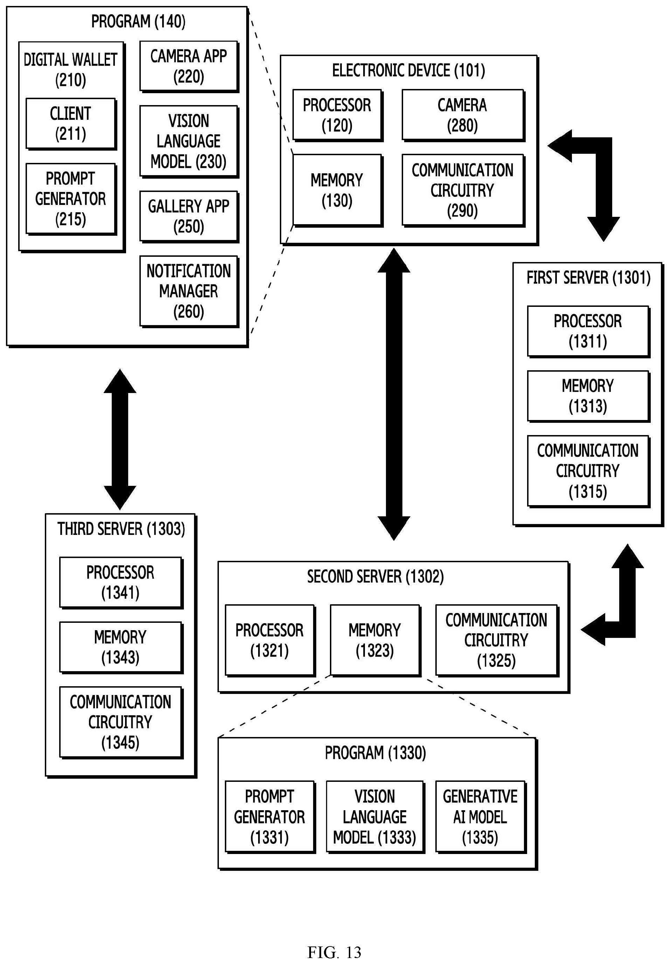

In an embodiment, the memory 130 may include, as a program 140, a digital wallet 210, a camera application (APP) 220, a vision language model 230, a generative artificial intelligence (AI) model 240, a gallery APP 250, and a notification manager 260. Although the generative AI model 240 is illustrated in FIG. 2 as being included in the program 140 of the electronic device 101, this is merely an example. According to an embodiment, the generative AI model 240 may be included externally (e.g., in a server 108 or a second server 1302 of FIG. 13).

In an embodiment, the digital wallet 210, the camera APP 220, the vision language model 230, the generative AI model 240, the gallery APP 250, and the notification manager 260 may include instructions. The instructions, when executed by the processor 120, may cause the electronic device 101 to perform functions of the digital wallet 210, the camera application APP 220, the vision language model 230, the generative AI model 240, the gallery APP 250, and/or the notification manager 260.

In an embodiment, the digital wallet 210 may provide a platform service that allows a user of the electronic device 101 to use services provided by a manufacturer (or a producer of the digital wallet 210) and/or a third party in one application.

In an embodiment, the digital wallet 210 may provide a service of managing an essential (or a credential) (or means for a transaction) of the user and verifying the user using authentication data (e.g., biometric data or a password). In an embodiment, the essential (or the credential) (or the means for the transaction) may indicate (collectively refer to) a credit card (or a payment card), an identity card, an electronic certificate, a bank account, a digital key (e.g., a house key or a vehicle key), a ticket, a coupon, a membership, or a boarding pass. In an embodiment, the transaction may indicate a process for business (a transaction of goods or services) or an action for exchanging data. For example, the transaction may indicate an action for exchanging data for payment, identity verification, account transfer, opening of a locking device, and/or use of a ticket, a coupon, a membership, or a boarding pass. Hereinafter, the essential, the credential, or the means for the transaction may be referred to as an essential.

In an embodiment, the digital wallet 210 may match and register an essential with a user account of the electronic device 101.

In an embodiment, the digital wallet 210 may include a client 211 and a prompt generator 215.

In an embodiment, the client 211 may communicate, through the communication circuitry 290, with the server 108 related to the digital wallet 210. In an embodiment, the server 108 may store data of an essential, registered in the digital wallet 210, related to the digital wallet 210. In an embodiment, the server 108 may correspond to the server 108 of FIG. 1.

In an embodiment, the prompt generator 215 may generate a prompt. In an embodiment, the prompt may include at least one sentence (or at least one word) for guiding generation of a card (or a visual object) (or content) (or an image) based on an essential. For example, the digital wallet 210 may generate a prompt based on a plurality of prompt templates.

For example, the digital wallet 210 may manage (or store) one or more prompt templates for each of categories of essentials, as shown in Table 1 below. In addition, for example, the digital wallet 210 may manage (or store) one or more prompt templates according to an event (or satisfaction of a condition), as shown in Table 2 below. For example, the categories of the essentials may include a payment card, an account, a membership, a coupon, a digital key, a mobile identification card, a boarding pass, and/or a ticket. However, it is not limited thereto. For example, the categories of the essentials may include a digital asset (e.g., crypto currency, an electric vehicle charging card, and/or an electronic certificate). Hereinafter, a category of an essential may be referred to as an essential category.

**[Table 1]**

| Essential Category | Prompt Template |
|---|---|
| Credit Card | Prompt Template 1 for Credit Card |
| | ... |
| | Prompt Template n for Credit Card |
| ... | ... |
| Boarding Pass | Prompt Template 1 for Boarding Pass |
| | ... |
| | Prompt Template m for Boarding Pass |

For example, the prompt templates for the essential categories may include one or more sentences (or at least one word) related to items related to an essential. For example, the prompt templates for the boarding pass may include one or more sentences (or at least one word) defining characteristics (e.g., a placement position, a size, a font, and/or a color) of an airline and/or boarding information (e.g., a departure location, a destination, a departure time, an arrival time, and a passenger).

**[Table 2]**

| Event | Prompt Template |
|---|---|
| Location-based Event | Prompt Template 1 for Location-based Event |
| | ... |
| | Prompt Template k for Location-based Event |
| ... | ... |
| Time-based Event | Prompt Template 1 for Time-based Event |
| | ... |
| | Prompt Template I for Time-based Event |

For example, the prompt templates for an event may include one or more sentences (or at least one word) related to items related to the event. For example, the prompt templates for the location-based event may include one or more sentences (or at least one word) defining characteristics (e.g., a placement position, a size, a font, and/or a color) of location-related information required according to an essential category (e.g., an airport facility in a case of a boarding pass).

In an embodiment, the camera APP 220 may control the camera 280 to capture an image (or a photograph) and/or a video. For example, based on a request from another application (e.g., the digital wallet 210), the camera APP 220 may provide the another application with data on an obtained (or captured) image (or photograph) (hereinafter, image data). However, it is not limited thereto. For example, the digital wallet 210 may control the camera 280 to capture an image (or a photograph) and/or a video without passing through the camera APP 220. The digital wallet 210 may obtain an image (or a photograph) and/or a video by controlling the camera 280 without passing through the camera APP 220.

In an embodiment, the vision language model 230 may be an AI model in which an AI model for processing an image (or vision) and an AI model for processing language are combined. For example, the vision language model 230 may extract a meaning from an image and output the extracted meaning as text. For example, the vision language model 230 may be an AI model such as a vision transformer or a ResNet model.

In an embodiment, the generative AI model 240 may include an AI model including a plurality of parameters related to a neural network having a structure based on an encoder and a decoder, such as a transformer. In an embodiment, the generative AI model 240 may include a bidirectional model (e.g., bidirectional encoder representations from transformers (BERT)) based on training on an encoder, or an auto-encoding model (e.g., a diffusion model). In an embodiment, the generative AI model 240 may include an auto-regressor model (e.g., a generative pre-trained transformer (GPT)) based on training on a decoder. In an embodiment, the generative AI model 240 may include a sequence-to-sequence model (e.g., Stable Diffusion or DALL-E 2) based on training on an encoder and a decoder. In an embodiment, the generative AI model 240 may include a large language model (LLM) for processing natural language based on massive parameters. However, it is not limited thereto. The generative AI model 240 may include parameters for driving a neural network such as a convolutional neural network (CNN), a recurrent neural network (RNN), a feedforward neural network (FNN), and/or a long short-term memory (LSTM).

In an embodiment, the generative AI model 240 may generate visual content based on a prompt. In an embodiment, the visual content may indicate essential information. Although the generative AI model 240 is illustrated in the description of FIG. 2 as generating visual content based on a prompt, this is merely an example. According to an embodiment, the visual content may be generated by an external generative AI model (e.g., in the server 108 or the second server 1302 of FIG. 13).

In an embodiment, the gallery APP 250 may be a viewer of an image (or a photograph) and/or a video. In an embodiment, the gallery APP 250 may manage an image (or a photograph) and/or a video stored in the memory 130 of the electronic device 101. For example, based on a request from another application (e.g., the digital wallet 210), the gallery APP 250 may provide selected image data to the another application. However, it is not limited thereto. For example, the digital wallet 210 may access an image (or a photograph) and/or a video stored in the memory 130 without passing through the gallery APP 250. For example, the digital wallet 210 may access an image (or a photograph) and/or a video stored in the memory 130, through a file system that structures data stored in the memory 130, without passing through the gallery APP 250. Accordingly, the digital wallet 210 may obtain an image (or a photograph) and/or a video stored in the memory 130 by accessing the memory 130 through the file system without passing through the gallery APP 250.

In an embodiment, the notification manager 260 may provide a function for notifying a specified application of occurrence of a specified event. For example, the specified event may be an event related to an essential. For example, the specified event may be an event indicating that a condition for updating an essential is satisfied. For example, in a case that the essential is a boarding pass, the notification manager 260 may notify the digital wallet 210 of occurrence of the specified event in a case that a location of the electronic device 101 is located within a specified distance from a departure location. In an embodiment, the digital wallet 210 may determine whether to update the essential related to the specified event, based on a notification of the notification manager 260.

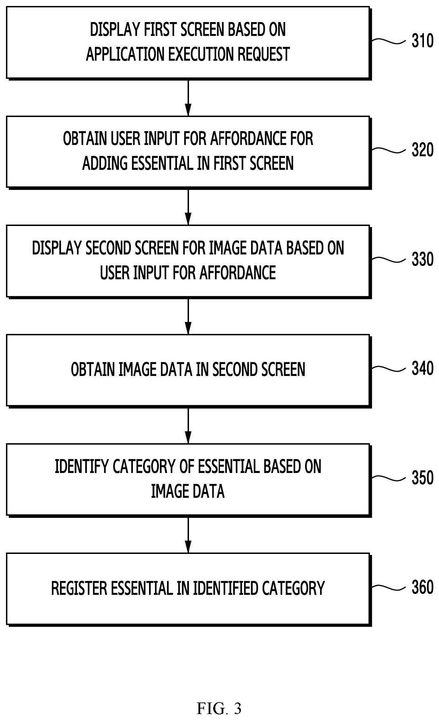

Hereinafter, an operation in which the electronic device 101 registers an essential will be described with reference to FIGS. 3 to 5.

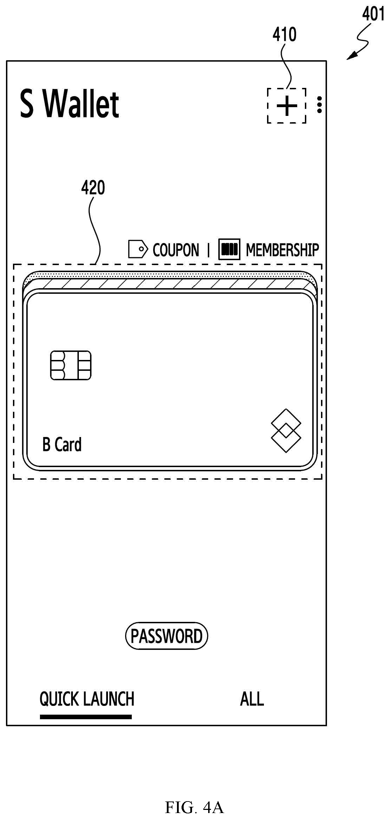

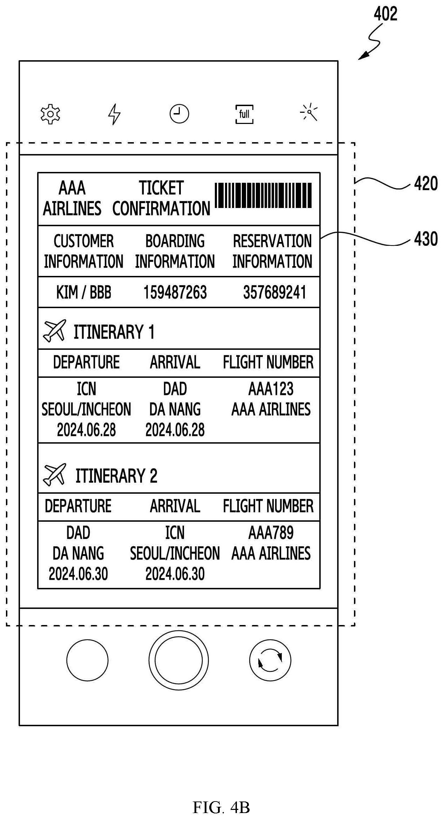

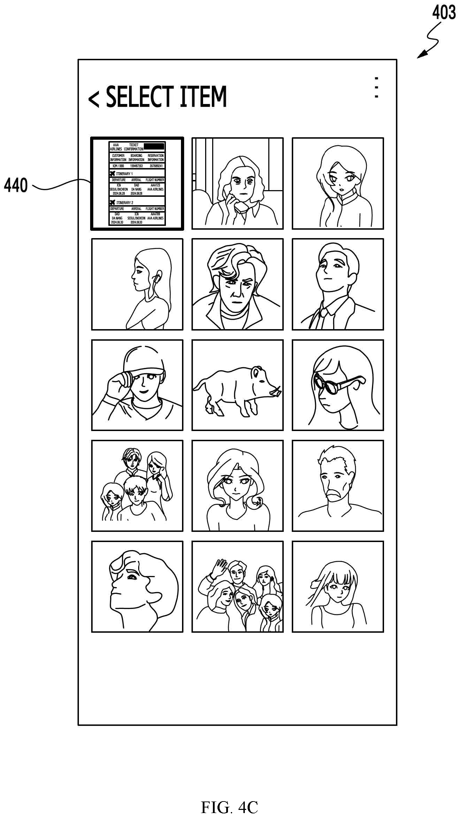

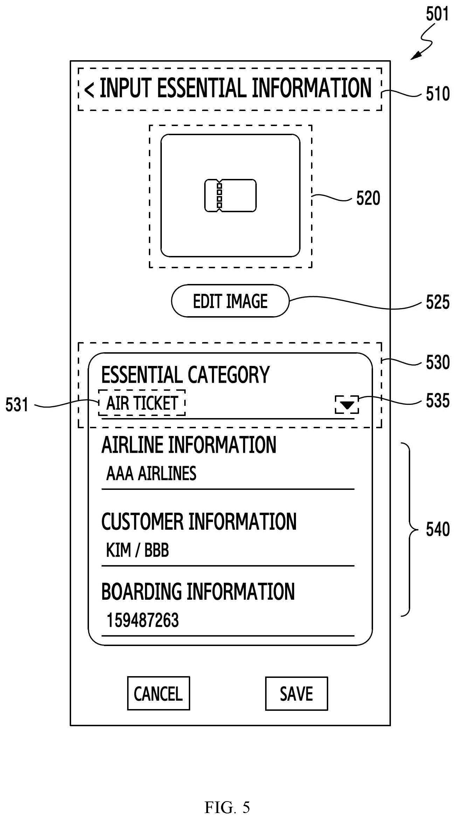

FIG. 3 is a flowchart illustrating an operation of an electronic device, according to an embodiment. FIG. 4A is a diagram illustrating a screen of a digital wallet, according to an embodiment. FIGS. 4B and 4C are diagrams illustrating screens for obtaining image data, according to an embodiment. FIG. 5 is a diagram illustrating a screen indicating information of an essential, according to an embodiment.

FIGS. 3 to 5 may be described with reference to components of the electronic device 101 of FIGS. 1 and 2. Operations of FIG. 3 may be performed by the electronic device 101 and/or the processor 120 of FIGS. 1 and 2. Some of the operations of FIG. 3 may be omitted. An execution order of the operations of FIG. 3 may be changed.

Referring to FIG. 3, in operation 310, the electronic device 101 may display a first screen based on an application execution request. For example, the electronic device 101 may display a first screen of a digital wallet 210 based on obtaining a user input requesting execution of the digital wallet 210. In an embodiment, the first screen of the digital wallet 210 may be a main screen (or an initial screen) of the digital wallet 210. For example, referring to FIG. 4A, a first screen 401 may include a user interface (e.g., an icon) (or an affordance) 410 for adding an essential and a region 420 in which a card-shaped (or rectangular) visual object indicating at least one essential (hereinafter, an essential card) is displayed.

In operation 320, the electronic device 101 may obtain a user input for a user interface for adding an essential in the first screen. For example, referring to FIG. 4A, the electronic device 101 may obtain a touch input (e.g., a press input) selecting the user interface 410 in the first screen 401.

In operation 330, the electronic device 101 may display a second screen for image data based on the user input for the user interface. In an embodiment, the second screen may be a screen for obtaining image data related to an essential. For example, the second screen may be a screen of the digital wallet 210 generated by the digital wallet 210. For example, the second screen may be a screen of the digital wallet 210 for obtaining at least a portion of an image captured through a camera 280 as image data. For example, the second screen may be a screen of the digital wallet 210 capable of accessing (e.g., searching for or selecting) image files in a file system of the electronic device 101. However, it is not limited thereto. In an embodiment, the second screen may be a screen of another application other than the digital wallet 210. In an embodiment, the another application may be an application capable of obtaining or selecting image data.

For example, the another application may be a camera APP 220 capable of capturing an image. For example, referring to FIG. 4B, a second screen 402 may be a screen of the camera APP 220. For example, the second screen 402 may be a screen for capturing image data 430. For example, the second screen 402 may include a preview region 420 (or a viewfinder) indicating at least a portion of an image captured through the camera 280. For example, the image captured through the camera 280 may be an image having a size corresponding to a field of view (FoV) of the camera 280. For example, the at least a portion of the image may be a specified portion of the image corresponding to the preview region 420 among the FoV of the camera 280.

For example, the another application may be a gallery APP 250 capable of searching for image files in the file system of the electronic device 101 or a file browsing application. For example, referring to FIG. 4C, a second screen 403 may be a screen of the gallery APP 250. For example, the second screen 403 may indicate images (or a list of images) stored in the electronic device 101 and/or a server 108. For example, the images displayed on the second screen 403 may be thumbnails. For example, the images stored in the server 108 may be images accessible with a user account of a user of the electronic device 101.

In operation 340, the electronic device 101 may obtain image data in the second screen.

In an embodiment, the electronic device 101 may obtain image data by capturing an image based on controlling the camera 280. For example, referring to FIG. 4B, while the second screen 402 generated by the camera APP 220 is displayed, the electronic device 101 may obtain the image data 430 through the camera APP 220 in response to a user input for capturing an image.

In an embodiment, the electronic device 101 may obtain image data by identifying and selecting the images stored in the electronic device 101 (or the images stored in the server 108) through the file system. For example, referring to FIG. 4C, while the second screen 403 generated by the gallery APP 250 is displayed, the electronic device 101 may identify image data 440 corresponding to a thumbnail in response to a user input selecting at least one thumbnail among a plurality of thumbnails of the images stored in the electronic device 101 (or the images stored in the server 108).

In operation 350, the electronic device 101 may identify a category of an essential (hereinafter, an essential category) based on image data. For example, the essential category may include a payment card (or a credit card) (or a transportation card), an account, a membership, a coupon, a digital key, a mobile identification card, a boarding pass, and/or a ticket. However, it is not limited thereto. For example, the essential category may include a digital asset (e.g., crypto currency, an electric vehicle charging card, and/or an electronic certificate).

For example, the electronic device 101 may extract (or obtain) (or identify) text data based on the image data. For example, the electronic device 101 may extract (or obtain) (or identify) text data from the image data through a vision language model 230. In an embodiment, the text data may include text included in the image data. In an embodiment, the text data may include text indicating a visual indication included in the image data. In an embodiment, the text data may include text indicating an essential category based on the text (or the visual indication) included in the image data. For example, in a case that the image data is a boarding pass, the text included in the image data may indicate an airline name, a customer name, and/or boarding information (e.g., a departure location, a destination, a departure time, an arrival time, and a passenger). For example, in a case that the image data is the boarding pass, the visual indication included in the image data may indicate a corporate identity (CI) (e.g., a logo, a color, and/or a font) and/or a brand identity (BI) of an airline. For example, in a case that the image data is the boarding pass, the visual indication included in the image data may indicate a code (e.g., a barcode and/or a quick response (QR) code) and/or an image (or a background image) (or a background color) of the boarding pass. For example, in a case that the image data is the boarding pass, the text indicating the essential category based on the text (or the visual indication) included in the image data may indicate the boarding pass.

According to an embodiment, the text indicating the essential category may not be extracted from the image data. In this case, according to a determination that the information for determining the category of the essential is not identified from image data 430 and 440, the electronic device 101 may query the user for the category of the essential. For example, the electronic device 101 may display a screen of the digital wallet 210 for querying the user for the essential category. For example, the electronic device 101 may obtain a user input while the screen for querying the essential category is displayed. For example, the electronic device 101 may determine the information for determining the essential category based on the user input that is input while the screen for querying the essential category is displayed.

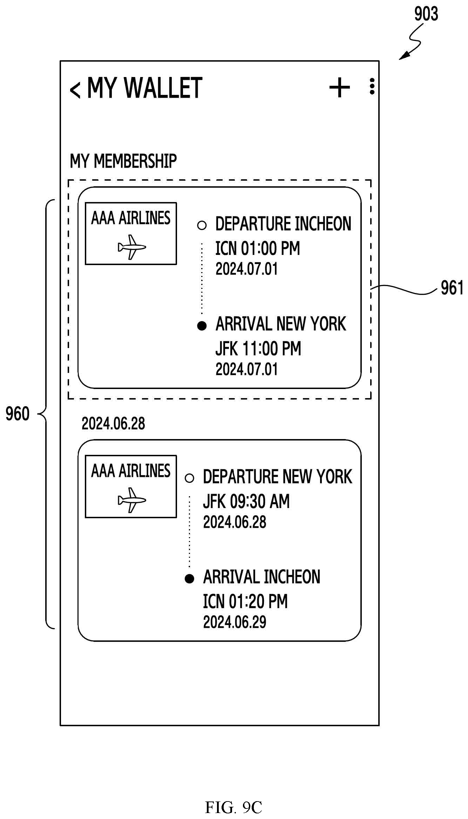

In operation 360, the electronic device 101 may register an essential in the identified essential category. For example, the electronic device 101 may identify (or determine) the essential category based on the text data. For example, the electronic device 101 may register an essential such that the essential is visible (or exposed) in a screen for simultaneously displaying one or more essentials classified into the identified essential category. For example, the electronic device 101 may register essential data through the digital wallet 210 to display an essential (or the essential data) in a third screen (e.g., 903 of FIG. 9C) for displaying essentials having the same essential category as an essential category of the essential, among a plurality of screens of the digital wallet 210. For example, the electronic device 101 may register essential data through the digital wallet 210 such that a registered essential is displayed at the very front among essentials displayed in an initial screen (e.g., the screen 401 of FIG. 4A) of the digital wallet 210.

In an embodiment, before registering an essential, the electronic device 101 may show, to the user, information of the essential to be registered (hereinafter, essential information). For example, the essential information may include at least a portion of the text data extracted from image data. For example, in a case that the essential is a boarding pass, the essential information may include an essential category, an airline name, a customer name, and/or boarding information among the text data extracted from the image data. For example, the essential information may include an essential card (or a card-shaped visual object generated based on the text data) indicating the essential. For example, the essential information may include a background image of the essential card generated based on the text data.

For example, referring to FIG. 5, the electronic device 101 may display a screen 501 including essential information. For example, the screen 501 may include a region 510 for indicating that it is a screen on which the essential information is displayed.

For example, the screen 501 may include a region 520 in which an essential card is displayed. In an embodiment, the essential card may be generated through a generative AI model 240 after an essential is registered. In an embodiment, the essential card may be generated through the generative AI model 240 before an essential is registered. For example, the essential card may be generated through the generative AI model 240 before the screen 501 is displayed.

For example, in order to generate the essential card, the electronic device 101 may obtain (or generate) (or identify) a prompt based on the text data. For example, the electronic device 101 may generate a prompt by inputting the text data to a prompt generator 215. For example, the electronic device 101 may generate a prompt by inputting the text data to a prompt template corresponding to an essential category among one or more prompt templates. For example, in a case that the essential category is a boarding pass, the electronic device 101 may generate a prompt for a boarding pass in Table 4 below based on a prompt template for a boarding pass in Table 3 below.

**[Table 3]**

| |
|---|
| Form of the ticket: Generate a rectangular airplane ticket-shaped ticket having a width of 15 cm and a height of 5 cm by using the representative color of <airline>, and, as the content of the ticket, place <departure location> and <departure time> on the left side and place <destination> and <arrival time> on the right side. |
| Background image of the ticket: At the bottom portion of the ticket, generate an image related to <destination> with a time-based background that matches <arrival time>. |
| Information related to the ticket content: Below that, briefly provide weather, city history, and tourism information on <destination>. Add store information on <top three great restaurant list> found based on <most-used payment card> at <destination>. Finally, provide instructions on how to use Samsung Pay at <destination>. |

**[Table 4]**

| |
|---|
| Form of the ticket: Generate a rectangular airplane ticket-shaped ticket having a width of 15 cm and a height of 5 cm by using the representative color of AAA Airlines, and, as the content of the ticket, place Seoul/Incheon and June 28, 2024, 09:00 on the left side and place Da Nang and June 28, 2024, 13:10 on the right side. |
| Background image of the ticket: At the bottom portion of the ticket, generate an image related to Da Nang with a time-based background that matches June 28, 2024, 13:10. |
| Information related to the ticket content: Below that, briefly provide weather, city history, and tourism information on Da Nang. Add store information on AAA Restaurant, BBB Restaurant, and CCC Restaurant found based on Samsung Card at Da Nang. Finally, provide instructions on how to use Samsung Pay at Da Nang. |

For example, when Table 3 and Table 4 are compared, the prompt of Table 4 may be generated by inputting replacement texts (e.g., AAA Airlines, Seoul/Incheon, June 28, 2024, 09:00, Da Nang, June 28, 2024, 13:10, Samsung Card, AAA Restaurant, BBB Restaurant, and CCC Restaurant) into one or more items (e.g., <airline>, <departure location>, <departure time>, <destination>, <arrival time>, <most-used payment card>, and <top three great restaurant list>) of Table 3.

In an embodiment, texts replacing a portion of items (e.g., <airline>, <departure location>, <departure time>, and <destination>) among the one or more items may be included in text data extracted through image data. In an embodiment, texts replacing another portion of items (e.g., <most-used payment card> and <top three great restaurant list>) among the one or more items may be texts searched for through the server 108 based on the text data. For example, based on payment data managed by the server 108, a result of searching for a card with which the largest number of payments have been performed at <destination> may indicate text replacing <mostused payment card>. For example, based on the payment data managed by the server 108, a result of searching for three stores at which the largest number of payments have been performed at <destination> may indicate texts replacing <top three great restaurant list>.

For example, the electronic device 101 may obtain (or identify) essential data including an essential card based on a prompt. For example, the electronic device 101 may obtain (or identify) the essential data including the essential card by inputting the prompt to the generative AI model 240.

Referring again to FIG. 5, for example, the screen 501 may include a region 530 indicating an essential category and a region 540 indicating essential information corresponding to the essential category. For example, the essential information displayed in the region 540 may be different according to an essential category. For example, in a case that the essential category is a boarding pass, airline information, customer information, and/or boarding information may be displayed in the region 540. For example, in a case that the essential category is a coupon, a coupon name, a coupon type, a coupon number, an expiration period, a brand, and a memo may be displayed in the region 540. For example, in a case that the essential category is an account, a bank, an account number, and/or a password may be displayed in the region 540. For example, in a case that the essential category is an account, a membership name and a membership card number may be displayed in the region 540.

For example, the electronic device 101 may edit (or modify) (or change) at least a portion of the essential information displayed in the screen 501 based on a user input. For example, in the screen 501, the electronic device 101 may change the essential card displayed in the region 520 based on a user input selecting a user interface (e.g., an icon or a button) 525 for editing the essential card.

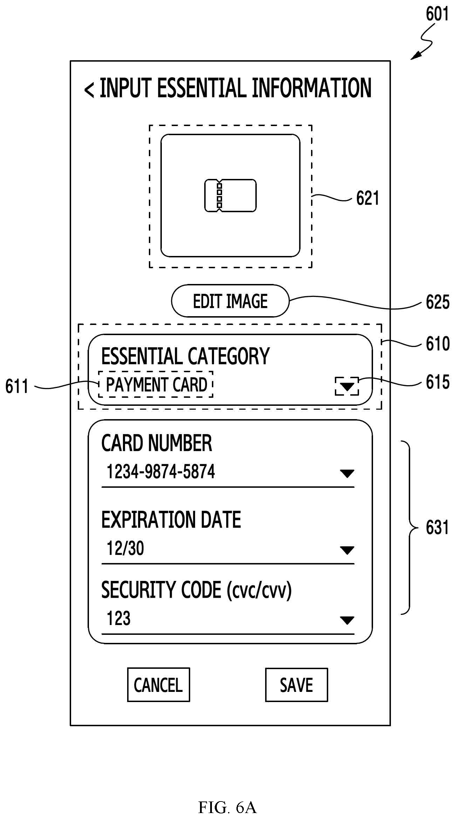

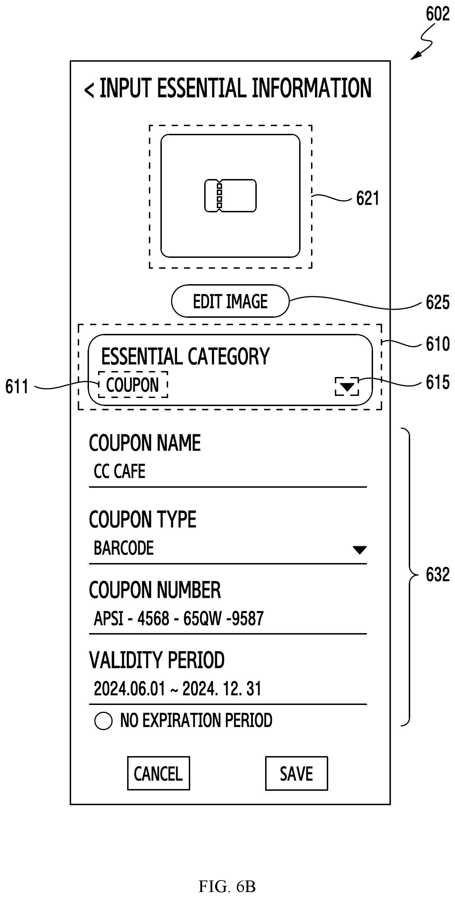

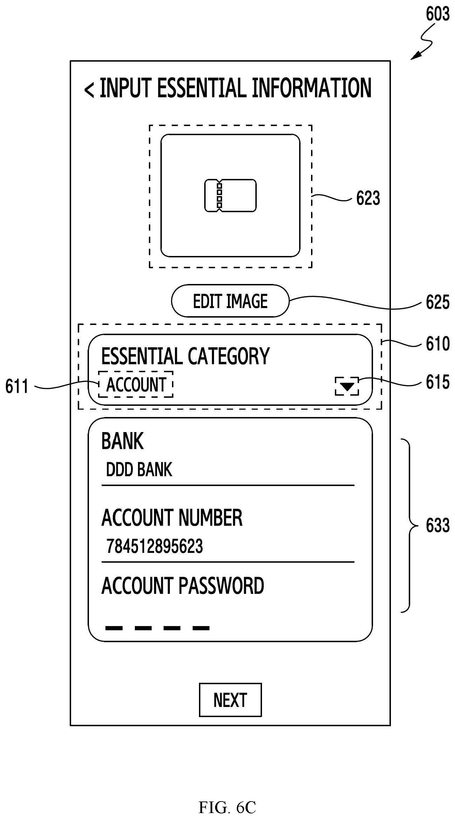

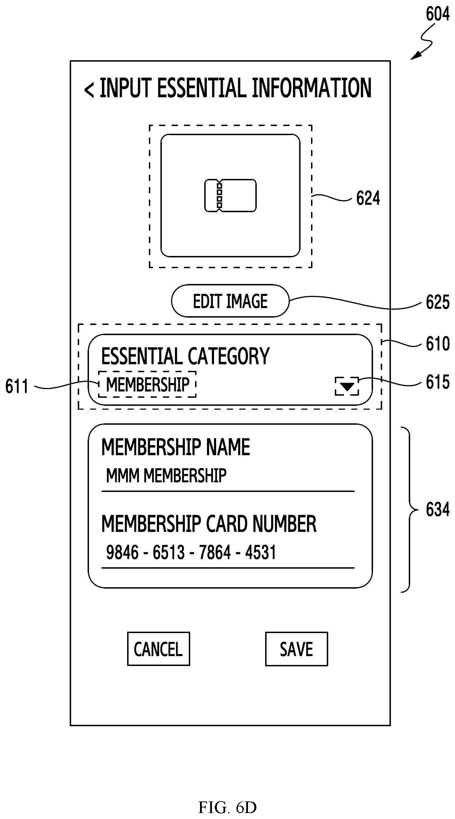

For example, in the screen 501, the electronic device 101 may display a user interface (UI) (e.g., a list) displaying changeable essential categories based on a user input selecting a user interface 535 around a field 531 in which an essential category (e.g., a boarding pass) is written. For example, the electronic device 101 may change the essential category displayed in the field 531 of the region 530 to an essential category selected in the UI displaying the changeable essential categories. For example, the electronic device 101 may change the region 540 indicating the essential information corresponding to the essential category based on the category selected in the UI displaying the changeable essential categories. For example, the electronic device 101 may display, in the region 540, the essential information corresponding to the selected essential category. For example, based on selecting a payment card in the UI, the electronic device 101 may display essential information related to the payment card (e.g., a screen 601 of FIG. 6A). For example, based on selecting a coupon in the UI, the electronic device 101 may display essential information related to the coupon (e.g., a screen 602 of FIG. 6B). For example, based on selecting an account in the UI, the electronic device 101 may display essential information related to the account (e.g., a screen 603 of FIG. 6C). For example, based on selecting a membership in the UI, the electronic device 101 may display essential information related to the membership (e.g., a screen 604 of FIG. 6D).

For example, in the screen 501, the electronic device 101 may change the essential information based on a user input for changing text written in fields of the region 540 indicating the essential information corresponding to the essential category.

In an embodiment, the electronic device 101 may register an essential based on a user input (e.g., a touch input selecting "Save") on the screen 501 showing, to the user, essential information of the essential to be registered.

Although FIG. 3 illustrates that the electronic device 101 registers an essential after entering the first screen 401 of the digital wallet 210, this is merely an example. In an embodiment, the electronic device 101 may cause the digital wallet 210 to register an essential based on sharing, with the digital wallet 210, image data displayed in a screen of another application other than the digital wallet 210 (e.g., a messenger application, an Internet browsing application, the camera APP 220, or the gallery APP 250). For example, the electronic device 101 may execute the digital wallet 210 in response to a user input for sharing, with the digital wallet 210, image data displayed in a screen of another application operating in a foreground (e.g., the messenger application, the Internet browsing application, the camera APP 220, or the gallery APP 250). For example, the electronic device 101 may perform the operation 350 and the operation 360 based on executing the digital wallet 210 (in a background or the foreground). For example, executing the digital wallet 210 in the background may mean that the electronic device 101 performs the operation 350 and the operation 360 in a state in which a screen of the digital wallet 210 is not displayed on the display module 160.

In the electronic device 101 as described above, a step of a user input required for the user to register an essential may be reduced. For example, in a screen of the digital wallet 210, the electronic device 101 may require from the user only one user input for selecting a user interface, a user input for selecting image data, and a user input for determining registration of essential data. Accordingly, the electronic device 101 may not require one or more user inputs required for the user to directly determine a category of an essential.

FIGS. 6A to 6D are diagrams illustrating screens indicating information of an essential according to an essential category, according to an embodiment.

FIGS. 6A to 6D may be described with reference to components of the electronic device 101 of FIGS. 1 and 2.

Compared with FIG. 5, FIGS. 6A to 6D may indicate essential information displayed according to a change in an essential category.

For example, referring to FIG. 6A, a screen 601 may indicate payment card information according to a payment card identified based on payment card data.

For example, the screen 601 may include a region 610 indicating an essential category. For example, the screen 601 may include a field 611 in which an essential category (e.g., a payment card) is written and a user interface 615 for changing essential categories. For example, the screen 601 may include a region 621 in which an essential card indicating a payment card is displayed and a user interface 625 for editing the essential card. For example, the screen 601 may include a region 631 indicating items (e.g., a card number, an expiration date, and/or a security code) corresponding to a payment card category.

For example, in the screen 601, the electronic device 101 may change the essential card indicating the payment card displayed in the region 621, based on a user input selecting the user interface 625 for editing the essential card. For example, in the screen 601, the electronic device 101 may change payment card information based on a user input for changing text written in fields of the region 631 indicating the items (e.g., the card number, the expiration date, and/or the security code) corresponding to the payment card category.

For example, referring to FIG. 6B, a screen 602 may indicate coupon information according to a coupon identified based on coupon data.

For example, the screen 602 may include a region 610 indicating an essential category. For example, the screen 602 may include a field 611 in which an essential category (e.g., a coupon) is written and a user interface 615 for changing essential categories. For example, the screen 602 may include a region 622 in which an essential card indicating a coupon is displayed and a user interface 625 for editing the essential card. For example, the screen 602 may include a region 632 indicating items (e.g., a coupon name, a coupon type, a coupon number, a validity period, a brand, and a memo) corresponding to a coupon category.

For example, in the screen 602, the electronic device 101 may change the essential card indicating the coupon displayed in the region 622, based on a user input selecting the user interface 625 for editing the essential card. For example, in the screen 602, the electronic device 101 may change coupon information based on a user input for changing text written in fields of the region 632 indicating the items (e.g., the coupon name, the coupon type, the coupon number, the validity period, the brand, and the memo) corresponding to the coupon category.

For example, referring to FIG. 6C, a screen 603 may indicate account information according to an account identified based on account data.

For example, the screen 603 may include a region 610 indicating an essential category. For example, the screen 603 may include a field 611 in which an essential category (e.g., an account) is written and a user interface 615 for changing essential categories. For example, the screen 603 may include a region 623 in which an essential card indicating an account is displayed and a user interface 625 for editing the essential card. For example, the screen 603 may include a region 633 indicating items (e.g., a bank, an account number, and a password) corresponding to an account category.

For example, in the screen 603, the electronic device 101 may change the essential card indicating the account displayed in the region 623, based on a user input selecting the user interface 625 for editing the essential card. For example, in the screen 603, the electronic device 101 may change account information based on a user input for changing text written in fields of the region 633 indicating the items (e.g., the bank, the account number, and the password) corresponding to the account category.

For example, referring to FIG. 6D, a screen 604 may indicate membership information according to a membership identified based on membership data.

For example, the screen 604 may include a region 610 indicating an essential category. For example, the screen 604 may include a field 611 in which an essential category (e.g., a membership) is written and a user interface 615 for changing essential categories. For example, the screen 604 may include a region 624 in which an essential card indicating a membership is displayed and a user interface 625 for editing the essential card. For example, the screen 604 may include a region 634 indicating items (e.g., a membership name and a membership card number) corresponding to a membership category.

For example, in the screen 604, the electronic device 101 may change the essential card indicating the membership displayed in the region 624, based on a user input selecting the user interface 625 for editing the essential card. For example, in the screen 604, the electronic device 101 may change membership information based on a user input for changing text written in fields of the region 634 indicating the items (e.g., the membership name and the membership card number) corresponding to the membership category.

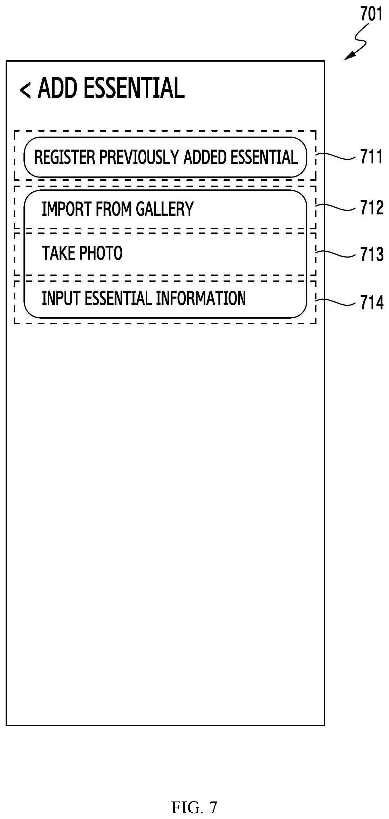

FIG. 7 is a diagram illustrating a screen for selecting a method for obtaining information of an essential, according to an embodiment.

FIG. 7 may be described with reference to components of the electronic device 101 of FIGS. 1 and 2.

Referring to FIG. 7, a screen 701 may be displayed in response to a touch input (e.g., a press input) selecting a user interface (e.g., 410 of FIG. 4A) in a first screen (e.g., 401 of FIG. 4A). For example, the screen 701 may be displayed after the first screen 401 is displayed and before a second screen (e.g., 402 of FIG. 4B or 403 of FIG. 4C) is displayed.

For example, the screen 701 may include a region 711 for registering a previously added essential. For example, the screen 701 may include at least one of a region 712 causing display of a screen capable of accessing (e.g., searching for or selecting) image files in a file system of the electronic device 101, a region 713 causing display of a screen for obtaining at least a portion of an image captured through a camera 280 as image data, or a region 714 causing display of a screen for a user to directly input essential information.

For example, the electronic device 101 may obtain an essential registered in a user account of the electronic device 101 from a server 108, based on identifying that the region 711 is selected. For example, the electronic device 101 may display a second screen (e.g., 403 of FIG. 4C), based on identifying that the region 712 is selected. For example, the electronic device 101 may display a second screen (e.g., 402 of FIG. 4B), based on identifying that the region 713 is selected. For example, the electronic device 101 may display a screen for the user to directly input essential information, based on identifying that the region 713 is selected.

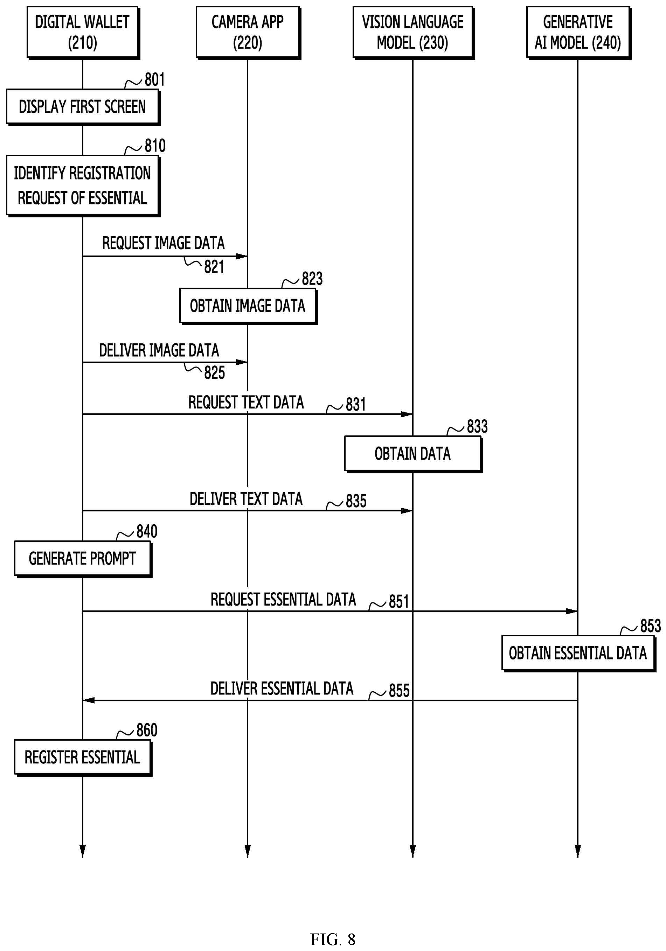

FIG. 8 is a flowchart illustrating an operation in which an electronic device registers an essential, according to an embodiment.

FIG. 8 may be described with reference to components of the electronic device 101 of FIGS. 1 and 2. Operations of FIG. 8 may be performed by the electronic device 101 and/or the processor 120 of FIGS. 1 and 2. Some of the operations of FIG. 8 may be omitted. An execution order of the operations of FIG. 8 may be changed.

Referring to FIG. 8, in operation 801, a digital wallet 210 may display a first screen (e.g., 401 of FIG. 4A).

In operation 810, the digital wallet 210 may identify a registration request of an essential. For example, the digital wallet 210 may identify the registration request of the essential based on obtaining a user input for a user interface (e.g., 410 of FIG. 4A) for adding the essential in the first screen 401.

In operation 821, the digital wallet 210 may request image data from a camera APP 220. For example, the digital wallet 210 may request image data from the camera APP 220 based on identifying the registration request of the essential. However, it is not limited thereto. For example, the digital wallet 210 may request image data from a gallery APP (e.g., 250 of FIG. 2).

In operation 823, the camera APP 220 may obtain the image data. For example, the camera APP 220 may obtain, as the image data, an image captured through a camera (e.g., 280 of FIG. 2). For example, while a second screen (e.g., 402 of FIG. 4B) is displayed, the gallery APP 250 may obtain, as the image data, an image captured through the camera (e.g., 280 of FIG. 2).

In operation 825, the camera APP 220 may deliver the image data to the digital wallet 210. In an embodiment, based on obtaining the image data from the camera APP 220, the digital wallet 210 may display a screen (e.g., a screen of the digital wallet 210) different from the second screen 402. For example, the screen different from the second screen 402 may be a screen notifying that essential information is being generated.

In operation 831, the digital wallet 210 may request text data from a vision language model 230. For example, the digital wallet 210 may request text data based on image data from the vision language model 230.

In operation 833, the vision language model 230 may obtain the text data. For example, the vision language model 230 may extract a meaning from the image data and output the extracted meaning as the text data. In an embodiment, the text data may include text included in the image data. In an embodiment, the text data may include text indicating a visual indication included in the image data. In an embodiment, the text data may include text indicating an essential category based on the text (or the visual indication) included in the image data. For example, in a case that the image data is a boarding pass, the text included in the image data may indicate an airline name, a customer name, and/or boarding information (e.g., a departure location, a destination, a departure time, an arrival time, and a passenger). For example, in a case that the image data is the boarding pass, the visual indication included in the image data may indicate a corporate identity (CI) (e.g., a logo, a color, and/or a font) and/or a brand identity (BI) of an airline. For example, in a case that the image data is a payment card (or a credit card) (or a transportation card), the text included in the image data may indicate a card number, an expiration date, and/or a security code. For example, in a case that the image data is the payment card (or the credit card), the visual indication included in the image data may indicate an identity (e.g., a CI and/or a BI) of a card issuing company, a code (e.g., a barcode and/or a QR code) indicating a payment card, and/or an image (or a background image) (or a background color). For example, in a case that the image data is an account, the text included in the image data may indicate a bank name, an account number, and/or an account password. For example, in a case that the image data is the account, the visual indication included in the image data may indicate an identity (e.g., a CI and/or a BI) of a bank, a code (e.g., a barcode and/or a QR code) indicating the account, and/or an image (or a background image) (or a background color). For example, in a case that the image data is a membership, the text included in the image data may indicate a membership name and/or a membership card number. For example, in a case that the image data is the membership, the visual indication included in the image data may indicate an identity (e.g., a CI and/or a BI) of a membership company, a code (e.g., a barcode and/or a QR code) indicating the membership, and/or an image (or a background image) (or a background color). For example, in a case that the image data is a student identification card, the text included in the image data may indicate a name, a date of birth, a student number, and/or a university portal ID. For example, in a case that the image data is the student identification card, the visual indication included in the image data may indicate an identity (e.g., a CI and/or a BI) of a university and/or an image (or a background image) (or a background color). For example, in a case that the image data is a coupon, the text included in the image data may indicate a coupon name, a coupon type, a coupon number, and/or a validity period. For example, in a case that the image data is the coupon, the visual indication included in the image data may indicate an identity (e.g., a CI and/or a BI) of a coupon issuing company, a code (e.g., a barcode and/or a QR code) indicating the coupon, and/or an image (or a background image) (or a background color).

In operation 835, the vision language model 230 may deliver the text data to the digital wallet 210.

In operation 840, the digital wallet 210 may generate a prompt. For example, a prompt generator (e.g., 215 of FIG. 2) of the digital wallet 210 may generate a prompt. For example, the digital wallet 210 may identify, from one or more prompt templates for each of essential categories, a prompt template corresponding to an essential category identified from text data. For example, the digital wallet 210 may generate the prompt by inputting the text data to the identified prompt template.

In operation 851, the digital wallet 210 may request essential data from a generative AI model 240. For example, the essential data may include an essential card (or a visual object).

In operation 853, the generative AI model 240 may obtain the essential data. For example, the generative AI model 240 may generate essential data based on a prompt.

In operation 855, the generative AI model 240 may deliver the essential data to the digital wallet 210.

In operation 860, the digital wallet 210 may register an essential.

In an embodiment, before registering an essential, the digital wallet 210 may display, to a user, a screen (e.g., a screen 501 of FIG. 5) indicating essential information of the essential to be registered. In an embodiment, the digital wallet 210 may register the essential based on a user input selecting a specified user interface (e.g., "Save") on the screen 501.

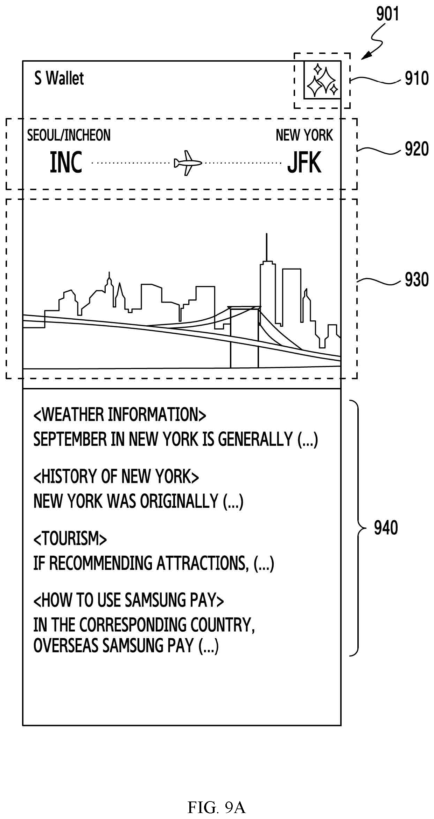

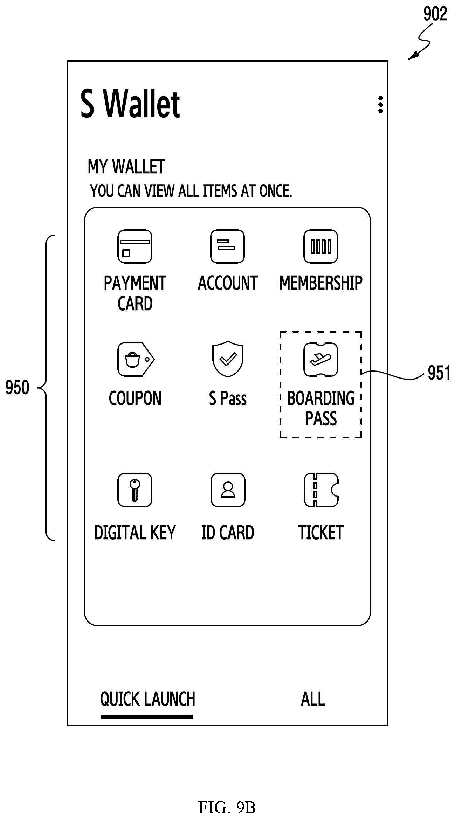

FIG. 9A is a diagram illustrating essential data indicating an essential, according to an embodiment. FIG. 9B is a diagram illustrating a screen classifying essentials, according to an embodiment. FIG. 9C is a diagram illustrating a screen indicating essentials included in an essential category, according to an embodiment.

FIGS. 9A to 9C may be described with reference to components of the electronic device 101 of FIGS. 1 and 2.

Referring to FIG. 9A, a screen 901 displaying essential data may include a visual object 910 indicating that it is an essential card (or essential information) generated through a generative AI model 240. For example, the screen 901 may include a region 920 including at least a portion of text data extracted from image data. In an embodiment, in a case that an essential category is a boarding pass, the region 920 may include an airline name, a customer name, and/or boarding information. For example, the screen 901 may include regions 930 and 940 for displaying content (e.g., a background image, destination information, and/or a payment method) generated by the generative AI model 240 through a prompt generated from the text data.

In an embodiment, the essential data may include a first visual representation indicating visual representations (e.g., text, an image, and/or their placement, font, color, and size) described in image data (e.g., 430 of FIG. 4B and 440 of FIG. 4C). In an embodiment, the essential data may include a second visual representation obtained (or searched for) from the visual representations described in the image data 430 and 440. In an embodiment, the essential data may be generated by a prompt including first text and second text. The first text may be based on the visual representations described in the image data 430 and 440. The first text may be related to the first visual representation (e.g., text included in the region 920) included in the essential data. The second text may be text that is not described in the image data 430 and 440. For example, the second text may be text searched for from a server 108 based on the first text. For example, the second text may be related to the second visual representation (e.g., text and/or an image included in the regions 930 and 940) included in the essential data.

The screen 901 of FIG. 9A may be displayed based on obtaining an input selecting an essential card in a region (e.g., 420 of FIG. 4A) in which essential cards displayed in a first screen (e.g., 401 of FIG. 4A) are displayed.

In an embodiment, referring to FIG. 9B, a screen 902 may display essential categories 950. For example, in the screen 902, based on a user input selecting an essential category 951 among the essential categories 950, a screen (e.g., a screen 903 of FIG. 9C) for displaying essentials classified into the essential category 951 may be displayed. For example, the screen 901 of FIG. 9A may be displayed based on obtaining an input selecting an essential card 961 in a region 960 in which essential cards classified into the same essential category displayed in a first screen 903 are displayed.

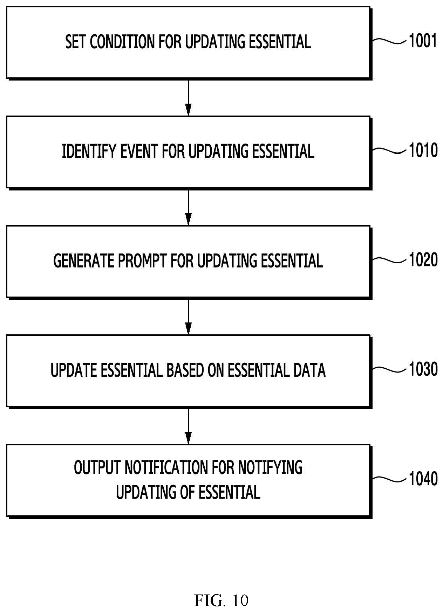

FIG. 10 is a flowchart illustrating an operation in which an electronic device updates an essential, according to an embodiment.

FIG. 10 may be described with reference to components of the electronic device 101 of FIGS. 1 and 2. Operations of FIG. 10 may be performed by the electronic device 101 and/or the processor 120 of FIGS. 1 and 2. Some of the operations of FIG. 10 may be omitted. An execution order of the operations of FIG. 10 may be changed.

In operation 1001, the electronic device 101 may set a condition for updating an essential. For example, the electronic device 101 may set the condition for updating the essential based on an essential category of a generated essential. For example, the electronic device 101 may set the condition for updating the essential based on a location and/or a time related to the essential category. For example, a condition for updating an essential based on a location may be a condition in which the electronic device 101 is located at a location at which a transaction using the essential (e.g., boarding in a case of a boarding pass or payment in a case of a payment card) may be generated. For example, a condition for updating an essential based on a time may be a condition in which a current time is a time at which a transaction using the essential (e.g., boarding in a case of a boarding pass or payment in a case of a payment card) may be generated.

According to an embodiment, the electronic device 101 may set the condition for updating the essential based on a user input. For example, the electronic device 101 may display, to a user, a screen presenting one or more keywords for setting the condition for updating the essential. For example, the electronic device 101 may set the condition for updating the essential based on a user input selecting at least one keyword among the one or more keywords. For example, the electronic device 101 may set, as the condition for updating the essential, a condition (e.g., a location condition and/or a time condition) related to a keyword "airport" selected by the user. For example, the electronic device 101 may set, as the condition for updating the essential, a condition (e.g., a condition of being located adjacent to Incheon Airport on a boarding date) related to the keyword "airport" selected by the user. In an embodiment, a keyword may indicate an attribute value indicating a place type. For example, a keyword may be a word indicating a place, such as an airport, an aquarium, a bank, a cafe, a museum, a park, a restaurant, a school, a playground, a zoo, or a university.

In operation 1010, the electronic device 101 may identify an event for updating the essential. For example, the electronic device 101 may identify the event for updating the essential based on satisfaction of the condition for updating the essential.

For example, in a case of a condition for updating an essential related to a location, the electronic device 101 may obtain location information of the electronic device 101 through communication circuitry 290. However, it is not limited thereto. For example, the electronic device 101 may identify location information of the electronic device 101 based on an indoor positioning system (IPS).

For example, in a case of the condition for updating the essential related to the location, the electronic device 101 may identify the event for updating the essential based on comparing information of a current location of the electronic device 101 (e.g., a latitude and/or a longitude of the electronic device 101) with location information according to the condition (e.g., location information of Incheon Airport). In an embodiment, the location information according to the condition may be extracted from image data (or visual data). In an embodiment, the location information according to the condition may be obtained from a server 108 based on a parameter indicating a type and/or a name of a place. For example, in a case of the condition for updating the essential related to the location, the electronic device 101 may transmit information of a current location (e.g., a medium access control (MAC) address of a surrounding access point (AP)) of the electronic device 101 to the server 108. For example, the electronic device 101 may obtain, from the server 108, keyword information indicating location data corresponding to the information of the current location of the electronic device 101. In an embodiment, in a case that the keyword information indicates a location according to the condition for updating the essential, the electronic device 101 may identify that the event for updating the essential has occurred.

In operation 1020, the electronic device 101 may generate a prompt for updating the essential. For example, the electronic device 101 may obtain (or generate) (or identify) a prompt based on the event identified for updating the essential. For example, the electronic device 101 may generate a prompt by inputting content of the event to a prompt generator 215. For example, the electronic device 101 may generate a prompt by inputting the content of the event to a prompt template corresponding to the event among one or more prompt templates according to an event (or satisfaction of a condition). For example, in a case that an essential category is a boarding pass and a keyword is "airport," the electronic device 101 may generate a prompt for a boarding pass in Table 6 below based on a prompt template for a boarding pass in Table 5 below.

**[Table 5]**

| |
|---|
| Add a map link and parking information for <departure airport>. |
| Find <three great restaurants> near <departure airport>, and generate representative images and menu information. |

**[Table 6]**

| |
|---|
| Add a map link and parking information for Incheon Airport. |
| Generate representative images and menu information for DDD Restaurant, EEE Restaurant, and FFF Restaurant, which are restaurants near Incheon Airport. |

For example, when Table 5 and Table 6 are compared, the prompt of Table 6 may be generated by inputting the replacement texts (e.g., Incheon Airport, DDD Restaurant, EEE Restaurant, and FFF Restaurant) into the one or more items (e.g., <departure airport> and <three great restaurants>) of Table 5.

For another example, in a case that an essential category is a train ticket and a keyword is "train_station", the electronic device 101 may generate a prompt for a train ticket in Table 8 below based on a prompt template for a train ticket in Table 7 below. However, it is not limited thereto. For example, the electronic device 101 may generate a prompt (e.g., the prompt of Table 4) for generating information to be added to a previous essential, based on the event identified for updating the essential. The information to be added to the previous essential generated by the prompt (e.g., the prompt of Table 4) may be added to a previous essential. According to an embodiment, the electronic device 101 may generate a prompt for updating an essential by merging the prompt (e.g., the prompt of Table 6) corresponding to the event identified for updating the essential into the prompt (e.g., the prompt of Table 4) for generating the previous essential.

**[Table 7]**

| |
|---|
| Generate a background screen by using the representative color and image of <region> in which <train station> is located, and include <departure |
| location>, <destination>, <departure time>, <arrival time>, <train number>, <seat>, and <boarding terminal> as the content. |
| Add links to <homepage> and the train timetable. |

**[Table 8]**

| |
|---|
| Generate a background screen by using the representative color and image of Seoul Special City, in which Seoul Station is located, and include Busan Station, Seoul Station, 11:00, 13:25, TR101, A11, and C3 as the content. |
| Add links to www.AAA rail.com and the train timetable. |

For another example, when Table 7 and Table 8 are compared, the prompt of Table 8 may be generated by inputting the replacement texts (e.g., Seoul Station, Seoul Special City, Busan Station, Seoul Station, 11:00, 13:25, TR101, A11, C3, and www.AAA_rail.com) into the one or more items (e.g., <train station>, <region>, <departure location>, <destination>, <departure time>, <arrival time>, <train number>, <seat>, <boarding terminal>, <homepage>, and <train timetable>) of Table 7.

In an embodiment, texts replacing a portion of items (e.g., <departure airport>) among the one or more items may be included in text data extracted through image data. In an embodiment, texts replacing another portion of items (e.g., <three great restaurants>) among the one or more items may be texts searched for through the server 108 based on the text data. However, it is not limited thereto. For example, texts replacing a portion of the one or more items may be texts related to the condition of the event.

In operation 1030, the electronic device 101 may update the essential based on essential data. For example, the electronic device 101 may obtain (or identify) essential data including an essential card for updating the essential based on the prompt. For example, the electronic device 101 may obtain (or identify) the essential data including the essential card for updating the essential by inputting the prompt to a generative AI model 240. In an embodiment, the electronic device 101 may update previously registered essential data based on new essential data obtained from the generative AI model 240. For example, the electronic device 101 may register the new essential data as essential data indicating an essential instead of the previously registered essential data. However, it is not limited thereto. For example, the electronic device 101 may generate information to be added to a previous essential to be added to a previous essential by inputting, to the generative AI model 240, the prompt (e.g., the prompt of Table 4) for generating information to be added to a previous essential generated based on the event identified for updating the essential. Accordingly, instead of generating an entire new essential, the electronic device 101 may update the essential (or a portion of the essential) by generating only information to be added to a previous essential and adding only the generated information to be added to the previous essential.

According to an embodiment, before updating the essential, the electronic device 101 may show, to the user, essential information of the essential to be updated. In an embodiment, the electronic device 101 may update the essential based on a user input (e.g., a touch input selecting "Save") on a screen (not illustrated) showing, to the user, the essential information of the essential to be updated.

In operation 1040, the electronic device 101 may output a notification for notifying updating of the essential. For example, the electronic device 101 may notify the user of updating of the essential by displaying a notification icon related to updating of the essential in a region (e.g., a notification region) of a display module (e.g., 160 of FIG. 1) of the electronic device 101. However, it is not limited thereto. For example, the electronic device 101 may notify the user of updating of the essential by audibly or tactually outputting the notification related to updating of the essential through a sound output module (e.g., 155 of FIG. 1) and/or a haptic module (e.g., 179 of FIG. 1) of the electronic device 101.

Although FIG. 10 illustrates that an essential is automatically updated according to an event, this is merely an example. The electronic device 101 according to an embodiment may update an essential based on a user input. For example, the electronic device 101 may update an essential based on a user input requesting updating of a selected essential. In an embodiment, the user input requesting updating of the selected essential may indicate data for updating the essential.

As described above, the electronic device 101 may update an essential based on an event. Accordingly, the user may check an essential to which new information required according to a location of the user is added. Accordingly, the electronic device 101 may remind the user of information that the user may miss.

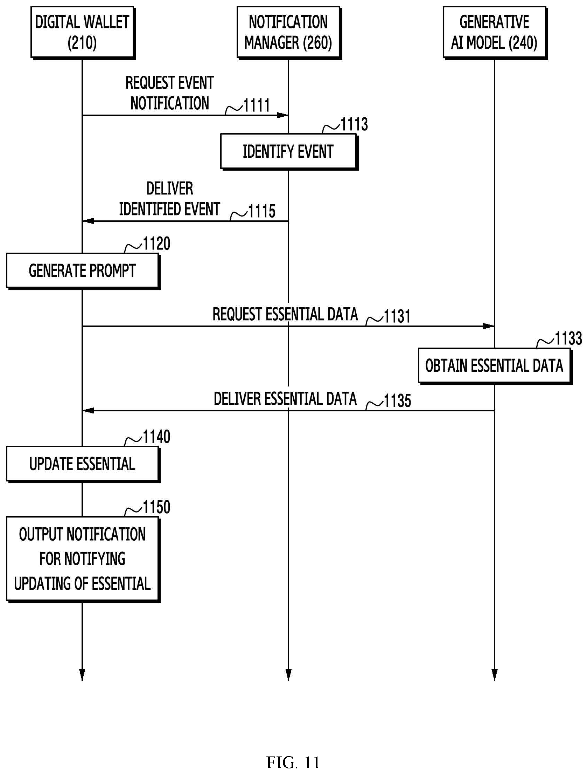

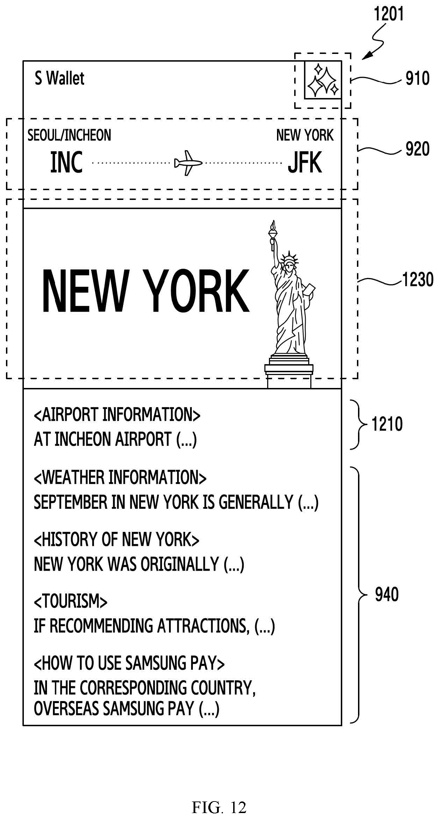

FIG. 11 is a flowchart illustrating an operation in which an electronic device updates an essential, according to an embodiment. FIG. 12 is a diagram illustrating essential data indicating an updated essential, according to an embodiment.

FIGS. 11 and 12 may be described with reference to components of the electronic device 101 of FIGS. 1 and 2. Operations of FIG. 11 may be performed by the electronic device 101 and/or the processor 120 of FIGS. 1 and 2. Some of the operations of FIG. 11 may be omitted. An execution order of the operations of FIG. 11 may be changed.

In operation 1111, a digital wallet 210 may request an event notification from a notification manager 260.

In operation 1113, the notification manager 260 may identify an event. For example, the notification manager 260 may identify an event for updating an essential based on satisfaction of a condition for updating the essential. For example, in a case that a previously registered keyword (an airport, a boarding pass, or the like) is stored, the electronic device 101 may identify an event mapped to the keyword.

For example, the notification manager 260 may identify an event set for updating each of regions 920 and 940 of an essential. For example, the notification manager 260 may identify at least one event among events set for updating the regions 920 and 940 of the essential. For example, in a case that the essential is a boarding pass, the digital wallet 210 may identify an event in which an airline and/or boarding information (e.g., a departure location, a destination, a departure time, an arrival time, and a passenger) is changed.

In operation 1115, the notification manager 260 may deliver the identified event to the digital wallet 210. For example, the notification manager 260 may deliver the identified event to the digital wallet 210 based on identifying the event mapped to the keyword.

For example, the notification manager 260 may deliver, to the digital wallet 210, the at least one identified event among the events set for updating the regions 920 and 940 of the essential.

In operation 1120, the digital wallet 210 may generate a prompt. For example, a prompt generator (e.g., 215 of FIG. 2) of the digital wallet 210 may generate a prompt. For example, the digital wallet 210 may identify, from one or more prompt templates for each of essential categories, a prompt template corresponding to an essential category identified from text data. For example, the digital wallet 210 may generate a prompt by inputting the text data to the identified prompt template.

For example, the digital wallet 210 may generate the prompt by inputting the text data to the prompt template corresponding to the at least one identified event among the events set for updating the regions 920 and 940 of the essential. For example, the digital wallet 210 may generate the prompt by inputting the text data to the prompt template for updating the regions 920 and 940 of the essential. For example, in a case that the essential is a boarding pass, the digital wallet 210 may generate a prompt by inputting text data to a prompt template corresponding to a changed event among the airline and/or the boarding information (e.g., the departure location, the destination, the departure time, the arrival time, and the passenger).

In operation 1131, the digital wallet 210 may request essential data from a generative AI model 240 based on the prompt generated in the operation 1120. For example, the essential data may include an essential card (or a visual object).

In operation 1133, the generative AI model 240 may obtain the essential data. For example, the generative AI model 240 may generate the essential data based on the prompt.

In operation 1135, the generative AI model 240 may deliver the essential data to the digital wallet 210.

In operation 1140, the digital wallet 210 may update the essential. For example, updating the essential may include updating all regions of the essential. However, it is not limited thereto. Updating the essential may include updating some regions among the regions of the essential. For example, the digital wallet 210 may update at least one region among the regions 920 and 940 of the essential. For example, the digital wallet 210 may update at least one region corresponding to the at least one identified event among the events set for updating the regions 920 and 940. For example, in a case that the essential is a boarding pass, the digital wallet 210 may update a region of the essential corresponding to the changed airline and/or boarding information (e.g., the departure location, the destination, the departure time, the arrival time, and the passenger) among the regions 920 and 940.

Referring to FIG. 12, a screen 1201 displaying essential data may include a visual object 910 indicating that it is an essential card (or essential information) generated through the generative AI model 240. For example, the screen 1201 may indicate an updated essential. For example, compared with a screen (e.g., 901 of FIG. 9A) indicating an essential before updating, the screen 1201 may further include additional information 1210. For example, compared with the screen 901 indicating the essential before updating, in the screen 1201, at least a portion (e.g., a background screen 1230) of content (e.g., a background image, destination information, and/or a payment method) generated by the generative AI model 240 may be changed. In an embodiment, the updated essential may include at least a portion of information included in the essential before updating (e.g., information included in the regions 920 and 940). In an embodiment, the updated essential may include information (e.g., information included in a region 1210) of a type different from the information included in the essential before updating (e.g., the information included in the regions 920 and 940). In an embodiment, the information of the different type may be related to the event for updating the essential. For example, the information of the different type may be related to location information for updating the essential.

In operation 1150, the digital wallet 210 may output a notification for notifying updating of the essential.

FIG. 13 is a block diagram of an electronic device and servers, according to an embodiment.

Referring to FIG. 13, an electronic device 101 may correspond to the electronic device 101 of FIG. 2. For example, in the electronic device 101 of FIG. 13, some components among components of the electronic device 101 of FIG. 2 may be omitted. For example, some components may be related to an AI model. For example, in the electronic device 101 of FIG. 13, the generative AI model 240 of the electronic device 101 of FIG. 2 may be omitted. However, it is not limited thereto. For example, in the electronic device 101 of FIG. 13, at least one of the prompt generator 215, the vision language model 230, or the generative AI model 240 of the electronic device 101 of FIG. 2 may be omitted. In an embodiment, a component omitted from the electronic device 101 of FIG. 2 may be included in an external electronic device (e.g., a second server 1302).

In an embodiment, a first server 1301 may correspond to the server 108 of FIG. 2. In an embodiment, the first server 1301 may store essential data. In an embodiment, the first server 1301 may mediate data exchange between the electronic device 101 and the second server 1302. However, it is not limited thereto. For example, the electronic device 101 and the second server 1302 may directly communicate with each other.

In an embodiment, the second server 1302 may include an AI model (e.g., a prompt generator 1331, a vision language model 1333, or a generative AI model 1335) as a program 1330. In an embodiment, the prompt generator 1331, the vision language model 1333, and the generative AI model 1335 may correspond to the prompt generator 215, the vision language model 230, and the generative AI model 240 of FIG. 2, respectively.

In an embodiment, the second server 1302 may have computing power capable of driving a higher-performance AI model than the electronic device 101.

In an embodiment, the second server 1302 may generate essential data by receiving image data from the electronic device 101. For example, the second server 1302 may extract text data through the vision language model 1333 from the image data from the electronic device 101. For example, the second server 1302 may generate a prompt based on the text data by using the prompt generator 1331. For example, the second server 1302 may generate essential data from the prompt using the generative AI model 1335. However, it is not limited thereto. For example, the second server 1302 may obtain text data from the electronic device 101. In this case, the second server 1302 may generate a prompt based on the text data from the electronic device 101 by using the prompt generator 1331 and generate essential data by inputting the prompt to the generative AI model 1335.

For example, the second server 1302 may obtain a prompt from the electronic device 101. In this case, the second server 1302 may generate essential data by inputting the prompt from the electronic device 101 to the generative AI model 1335.

For example, the second server 1302 may transmit the generated essential data to the electronic device 101. For example, the second server 1302 may indirectly transmit the generated essential data to the electronic device 101 through the first server 1301. For example, the second server 1302 may directly transmit the generated essential data to the electronic device 101 without the first server 1301.

In an embodiment, a third server 1303 may receive location information from the electronic device 101 (e.g., a medium access control (MAC) address of a surrounding access point (AP) of the electronic device 101). In an embodiment, the third server 1303 may identify location data corresponding to the location information of the electronic device 101. In an embodiment, the third server 1303 may transmit the location data including keyword information to the electronic device 101. Thereafter, in a case that the keyword information included in the location data indicates a location according to a condition for updating an essential, the electronic device 101 may identify that an event for updating the essential has occurred.

As described above, an electronic device 101 may comprise a display 160, at least one processor 120 comprising processing circuitry, and memory 130, comprising one or more storage mediums, storing instructions. The instructions, when executed by the at least one processor 120 individually or collectively, may cause the electronic device 101 to obtain a first user input for a first user interface 410 for adding means for a transaction in a first screen 401 of a digital wallet 210 displayed on the display 160. The instructions, when executed by the at least one processor 120 individually or collectively, may cause the electronic device 101 to display, through the display 160, a second screen 402 or 403 for obtaining image data 430 or 440 related to the means for the transaction, based on obtaining the first user input for the first user interface 410. The instructions, when executed by the at least one processor 120 individually or collectively, may cause the electronic device 101 to, based on obtaining a second user input for determining the image data 430 or 440 related to the means for the transaction in the second screen 402 or 403, obtain text data related to the means for the transaction indicated by the image data 430 or 440, based on inputting the image data 430 or 440 to a vision language model (VLM) 230. The text data may include information for determining a category of the means for the transaction. The instructions, when executed by the at least one processor 120 individually or collectively, may cause the electronic device 101 to register, by the digital wallet 210, the means for the transaction in a category indicated by the text data among a plurality of categories.

The instructions, when executed by the at least one processor 120 individually or collectively, may cause the electronic device 101 to register, by the digital wallet 210, the means for the transaction to display a visual object of the means for the transaction, in a third screen 903 for displaying visual objects of means having the same category as the category of the means for the transaction, among a plurality of screens of the digital wallet 210.

The instructions, when executed by the at least one processor 120 individually or collectively, may cause the electronic device 101 to identify a prompt based on the text data. The instructions, when executed by the at least one processor 120 individually or collectively, may cause the electronic device 101 to generate a visual object of the means for the transaction, by inputting the prompt to a generative artificial intelligence (AI) model. The instructions, when executed by the at least one processor 120 individually or collectively, may cause the electronic device 101 to display the visual object of the means for the transaction in the first screen 401 for displaying visual objects of a plurality of means of the digital wallet 210.

The instructions, when executed by the at least one processor 120 individually or collectively, may cause the electronic device 101 to identify a prompt form corresponding to the category of the means for the transaction among prompt forms. The instructions, when executed by the at least one processor 120 individually or collectively, may cause the electronic device 101 to identify a prompt based on the text data, based on changing words included in the prompt form to texts included in the text data.

The visual object may include a first visual representation indicating visual representations described in the image data 430 or 440, and a second visual representation obtained from the visual representations described in the image data 430 or 440.

The prompt may include first text and second text. The first text may be based on the visual representations described in the image data 430 or 440, and may be related to the first visual representation included in the visual object. The second text may not be described in the image data 430 or 440, may be searched for based on the first text, and may be related to the second visual representation included in the visual object.

The instructions, when executed by the at least one processor 120 individually or collectively, may cause the electronic device 101 to identify an event. The instructions, when executed by the at least one processor 120 individually or collectively, may cause the electronic device 101 to, according to a determination that the event is related to the means for the transaction, identify another prompt based on the event. The another prompt may include text related to the text data and other text indicating the event. The instructions, when executed by the at least one processor 120 individually or collectively, may cause the electronic device 101 to generate another visual object of the means for the transaction, by inputting the another prompt to the generative AI model. The instructions, when executed by the at least one processor 120 individually or collectively, may cause the electronic device 101 to display the another visual object of the means for the transaction instead of the visual object, in the first screen 401 of the digital wallet 210.

The another visual object may include at least a portion of information included in the visual object. The another visual object may include information of which another type is different from a type of the information included in the visual object. The another type of the information may be related to the event.

The instructions, when executed by the at least one processor 120 individually or collectively, may cause the electronic device 101 to, according to a determination that the information for determining the category of the means for the transaction is not identified from the image data 430 or 440, display a screen for querying the category of the means for the transaction. The instructions, when executed by the at least one processor 120 individually or collectively, may cause the electronic device 101 to obtain the information for determining the category of the means for the transaction that is input while the screen for querying the category is displayed.

The plurality of categories may include a credit card, a membership, a coupon, a driver's license, or a ticket.

The second screen 402 or 403 may be a screen of another application different from the digital wallet 210. The another application may be a gallery application or a camera application.

As described above, an electronic device 101 may comprise a display 160, at least one processor 120 comprising processing circuitry, and memory 130, comprising one or more storage mediums, storing instructions. The instructions, when executed by the at least one processor 120 individually or collectively, may cause the electronic device 101 to obtain image data related to an essential. The instructions, when executed by the at least one processor 120 individually or collectively, may cause the electronic device 101 to generate a prompt based on the image data. The prompt may include first text included in the image data and second text that is not included in the image data, and the second text may indicate information searched for based on the first text. The instructions, when executed by the at least one processor 120 individually or collectively, may cause the electronic device 101 to generate essential data indicating the essential, by inputting the prompt to a generative artificial intelligence (AI) model. The instructions, when executed by the at least one processor 120 individually or collectively, may cause the electronic device 101 to identify an event related to the essential after registering the essential data indicating the essential to a digital wallet 210. The instructions, when executed by the at least one processor 120 individually or collectively, may cause the electronic device 101 to generate another prompt based on the event, and the another prompt to include one or more texts among the first text and the second text included in the prompt, and one or more other texts not included in the prompt. The instructions, when executed by the at least one processor 120 individually or collectively, may cause the electronic device 101 to generate other essential data indicating the essential, by inputting the another prompt to the generative AI model. The other essential data may include information of which another type is different from a type of information included in the essential data, and the another type of the information may be related to the event. The instructions, when executed by the at least one processor 120 individually or collectively, may cause the electronic device 101 to register the other essential data indicating the essential instead of the essential data to the digital wallet 210.

As described above, a method may be performed in an electronic device 101 comprising a display 160. The method may comprise obtaining a first user input for a first user interface 410 for adding means for a transaction in a first screen 401 of a digital wallet 210 displayed on the display 160. The method may comprise displaying, through the display 160, a second screen 402 or 403 for obtaining image data 430 or 440 related to the means for the transaction, based on obtaining the first user input for the first user interface 410. The method may comprise, based on obtaining a second user input for determining the image data 430 or 440 related to the means for the transaction in the second screen 402 or 403, obtaining text data related to the means for the transaction indicated by the image data 430 or 440, based on inputting the image data 430 or 440 to a vision language model (VLM) 230. The text data may include information for determining a category of the means for the transaction. The method may comprise registering, by the digital wallet 210, the means for the transaction in a category indicated by the text data among a plurality of categories.

The method may comprise registering, by the digital wallet 210, the means for the transaction to display a visual object of the means for the transaction, in a third screen 903 for displaying visual objects of means having the same category as the category of the means for the transaction, among a plurality of screens of the digital wallet 210.

The method may comprise identifying a prompt based on the text data. The method may comprise generating a visual object of the means for the transaction, by inputting the prompt to a generative artificial intelligence (AI) model. The method may comprise displaying the visual object of the means for the transaction in the first screen 401 for displaying visual objects of a plurality of means of the digital wallet 210.

The visual object may include a first visual representation indicating visual representations described in the image data 430 or 440, and a second visual representation obtained from the visual representations described in the image data 430 or 440.

The prompt may include first text and second text. The first text may be based on the visual representations described in the image data 430 or 440, and may be related to the first visual representation included in the visual object. The second text may not be described in the image data 430 or 440, may be searched for based on the first text, and may be related to the second visual representation included in the visual object.

The method may comprise identifying an event. The method may comprise, according to a determination that the event is related to the means for the transaction, identifying another prompt based on the event, and the another prompt may include text related to the text data and other text indicating the event. The method may comprise generating another visual object of the means for the transaction, by inputting the another prompt to the generative AI model. The method may comprise displaying the another visual object of the means for the transaction instead of the visual object, in the first screen 401 of the digital wallet 210.

The method may comprise, according to a determination that the information for determining the category of the means for the transaction is not identified from the image data 430 or 440, displaying a screen for querying the category of the means for the transaction. The method may comprise obtaining the information for determining the category of the means for the transaction that is input while the screen for querying the category is displayed.

The second screen 402 or 403 may be a screen of another application different from the digital wallet 210. The another application may be a gallery application or a camera application.

As described above, a non-transitory computer readable storage medium may store a program comprising instructions. The instructions, when executed by at least one processor 120 of an electronic device 101 comprising a display 160 individually or collectively, may cause the electronic device 101 to obtain a first user input for a first user interface 410 for adding means for a transaction in a first screen 401 of a digital wallet 210 displayed on the display 160. The instructions, when executed by the at least one processor 120 individually or collectively, may cause the electronic device 101 to display, through the display 160, a second screen 402 or 403 for obtaining image data 430 or 440 related to the means for the transaction, based on obtaining the first user input for the first user interface 410. The instructions, when executed by the at least one processor 120 individually or collectively, may cause the electronic device 101 to, based on obtaining a second user input for determining the image data 430 or 440 related to the means for the transaction in the second screen 402 or 403, obtain text data related to the means for the transaction indicated by the image data 430 or 440, based on inputting the image data 430 or 440 to a vision language model (VLM) 230. The text data may include information for determining a category of the means for the transaction. The instructions, when executed by the at least one processor 120 individually or collectively, may cause the electronic device 101 to register, by the digital wallet 210, the means for the transaction in a category indicated by the text data among a plurality of categories.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a display (160),
at least one processor (120) comprising processing circuitry; and
memory (130), comprising one or more storage mediums, storing instructions,
wherein the instructions, when executed by the at least one processor (120) individually or collectively, cause the electronic device (101) to:
obtain a first user input for a first user interface (410) for adding means for a transaction in a first screen (401) of a digital wallet (210) displayed on the display (160),
display, through the display (160), a second screen (402, 403) for obtaining image data (430, 440) related to the means for the transaction, based on obtaining the first user input for the first user interface (410), and
based on obtaining a second user input for determining the image data (430, 440) related to the means for the transaction in the second screen (402, 403):
obtain text data related to the means for the transaction indicated by the image data (430, 440), based on inputting the image data (430, 440) to a vision language model (VLM) (230), the text data including information for determining a category of the means for the transaction, and
register, by the digital wallet (210), the means for the transaction in a category indicated by the text data among a plurality of categories.

2. The electronic device (101) of claim 1,
wherein the instructions, when executed by the at least one processor (120) individually or collectively, cause the electronic device (101) to:
register, by the digital wallet (210), the means for the transaction to display a visual object of the means for the transaction, in a third screen (903) for displaying visual objects of means having the same category as the category of the means for the transaction, among a plurality of screens of the digital wallet (210).

3. The electronic device (101) of claim 1 or claim 2,
wherein the instructions, when executed by the at least one processor (120) individually or collectively, cause the electronic device (101) to:
identify a prompt based on the text data,
generate a visual object of the means for the transaction, by inputting the prompt to a generative artificial intelligence (AI) model, and
display the visual object of the means for the transaction in the first screen (401) for displaying visual objects of a plurality of means of the digital wallet (210).

4. The electronic device (101) of claim 3,
wherein the instructions, when executed by the at least one processor (120) individually or collectively, cause the electronic device (101) to:
identify a prompt form corresponding to the category of the means for the transaction among prompt forms, and
identify a prompt based on the text data, based on changing words included in the prompt form to texts included in the text data.

5. The electronic device (101) of claim 3 or claim 4,
wherein the visual object includes a first visual representation indicating visual representations described in the image data (430, 440), and a second visual representation obtained from the visual representations described in the image data (430, 440).

6. The electronic device (101) of claim 5,
wherein the prompt includes first text and second text,
wherein the first text is based on the visual representations described in the image data (430, 440), and related to the first visual representation included in the visual object, and
wherein the second text is not described in the image data (430, 440), searched for based on the first text, and related to the second visual representation included in the visual object.

7. The electronic device (101) of any one of claim 3 to claim 6,
wherein the instructions, when executed by the at least one processor (120) individually or collectively, cause the electronic device (101) to:
identify an event,
according to a determination that the event is related to the means for the transaction:
identify another prompt based on the event, the another prompt including text related to the text data and other text indicating the event,
generate another visual object of the means for the transaction, by inputting the another prompt to the generative AI model, and
display the another visual object of the means for the transaction instead of the visual object, in the first screen (401) of the digital wallet (210).

8. The electronic device (101) of claim 7,
wherein the another visual object includes at least a portion of information included in the visual object,
wherein the another visual object includes information of which another type is different from a type of the information included in the visual object, and
wherein the another type of the information is related to the event.

9. The electronic device (101) of any one of claim 1 to claim 8,
wherein the instructions, when executed by the at least one processor (120) individually or collectively, cause the electronic device (101) to:
according to a determination that the information for determining the category of the means for the transaction is not identified from the image data (430, 440):
display a screen for querying the category of the means for the transaction, and
obtain the information for determining the category of the means for the transaction that is input while the screen for querying the category is displayed.

10. The electronic device (101) of any one of claim 1 to claim 9,
wherein the plurality of categories includes a credit card, a membership, a coupon, a driver's license, or a ticket.

11. The electronic device (101) of any one of claim 1 to claim 10,
wherein the second screen (402, 403) is a screen of another application different from the digital wallet (210), and
wherein the another application is a gallery application or a camera application.

12. An electronic device (101), comprising:
a display (160),
at least one processor (120) comprising processing circuitry; and
memory (130), comprising one or more storage mediums, storing instructions,
wherein the instructions, when executed by the at least one processor (120) individually or collectively, cause the electronic device (101) to:
obtain image data related to an essential,
generate a prompt based on the image data, the prompt including first text included in the image data and second text that is not included in the image data, the second text indicating information being searched for based on the first text,
generate essential data indicating the essential, by inputting the prompt to a generative artificial intelligence (AI) model,
identify an event related to the essential after registering the essential data indicating the essential to a digital wallet (210),
generate another prompt based on the event, the another prompt including at least one of the first text or the second text included in the prompt, and other text that is not included in the prompt,
generate other essential data indicating the essential, by inputting the another prompt to the generative AI model, the other essential data including information of which another type is different from a type of information included in the essential data, and the another type of the information being related to the event, and
register the other essential data indicating the essential instead of the essential data to the digital wallet (210).

13. A method of an electronic device (101) including a display (160), comprising:
obtaining a first user input for a first user interface (410) for adding means for a transaction in a first screen (401) of a digital wallet (210) displayed on the display (160),
displaying, through the display (160), a second screen (402, 403) for obtaining image data (430, 440) related to the means for the transaction, based on obtaining the first user input for the first user interface (410), and
based on obtaining a second user input for determining the image data (430, 440) related to the means for the transaction in the second screen (402, 403):
obtaining text data related to the means for the transaction indicated by the image data (430, 440), based on inputting the image data (430, 440) to a vision language model (VLM) (230), the text data including information for determining a category of the means for the transaction, and
registering, by the digital wallet (210), the means for the transaction in a category indicated by the text data among a plurality of categories.

14. The method of claim 13, comprising:
registering, by the digital wallet (210), the means for the transaction to display a visual object of the means for the transaction, in a third screen (903) for displaying visual objects of means having the same category as the category of the means for the transaction, among a plurality of screens of the digital wallet (210).

15. The method of claim 13, comprising:
identifying a prompt based on the text data,
generating a visual object of the means for the transaction, by inputting the prompt to a generative artificial intelligence (AI) model, and
displaying the visual object of the means for the transaction in the first screen (401) for displaying visual objects of a plurality of means of the digital wallet (210).
